# EUROPÄISCHE PATENTSCHRIFT

(11) **EP 4 639 736 B1**
(45) Veröffentlichungstag und Bekanntmachung des Hinweises auf die Patenterteilung: **12.08.2026**
(21) Anmeldenummer: 23814418.2
(22) Anmeldetag: 29.11.2023
(51) Int. Cl.: H02K 5/20

(54) **ELEKTRISCHER ANTRIEB FÜR EIN ELEKTRISCH ANGETRIEBENES FAHRZEUG**
ELECTRIC DRIVE FOR AN ELECTRICALLY DRIVEN VEHICLE
SYSTÈME DE COMMANDE ÉLECTRIQUE POUR UN VÉHICULE ÉLECTRIQUE

(30) Priorität: 21.12.2022 DE 102022214140
(43) Veröffentlichungstag der Anmeldung: 29.10.2025
(73) Patentinhaber: Robert Bosch GmbH, 70442 Stuttgart (DE)
(72) Erfinder: KANZLEITER, Tim, 69123 Heidelberg (DE); SZABO, Szilard, 1103 Budapest (HU); GOERDELER, Michael Wolfgang, 71034 Boeblingen (DE)
(86) Internationale Anmeldenummer: PCT/EP2023/083459
(87) Internationale Veröffentlichungsnummer: WO 2024/132416

(56) Entgegenhaltungen:
- DE-A1- 102015 221 776
- DE-A1- 102018 104 893
- JP-B2- 6 302 736
- US-A1- 2017 217 301
- US-A1- 2022 271 608

## Beschreibung

Die vorliegende Erfindung betrifft einen elektrischen Antrieb für ein elektrisch angetriebenes Fahrzeug.

### Stand der Technik

Bei elektrischen Maschinen, die in Elektroantriebsachsen elektrischer Fahrzeuge eingesetzt werden, wird üblicherweise deren Stator mit Flüssigkeit gekühlt. Dazu ist der Stator häufig in ein durch Druckgussverfahren hergestelltes Aluminiumgehäuse eingebaut. Das Gehäuse ist in der Regel doppelwandig ausgeführt und besitzt zwischen den beiden Wänden einen Kühlkanal durch welchen die Kühlflüssigkeit fließen kann. Dadurch wird die elektrische Maschine kontinuierlich umströmt und somit gekühlt.

Da aus Fertigungstechnischen Gründen das Roh-Gussteil des Bauteils, das die äußere Gestalt des Kühlkanals bildet, eine Entformungsschräge mit ca. 1,5 ° hat, ist der Nachteil des Standes der Technik, dass eine deutlich höhere Mengen an Material durch die Bearbeitung auf einen Durchmesser entfernt werden muss. Das führt zu zusätzlichen Kosten und erhöht bei Bauteilen, die im Druckgussverfahren hergestellt werden, auch das Risiko der Undichtigkeit. Zudem besteht bei der Montage der beiden Gehäuseteile, die den Kühlkanal bilden, das Risiko der Kollision beider Teile, wenn ein kleiner Spalt zwischen beiden Bauteilen angestrebt wird.

Beispielsweise beschreibt die DE 10 2020 201 127 A1 einen elektrischen Antrieb eines elektrisch angetriebenen Fahrzeugs mit einem Rotor und einem Stator, der von einem Gehäuse umschlossen ist. Das Gehäuse umfasst ein Außenteil und ein Innenteil, die jeweils eine sich in Axialrichtung des Gehäuses erstreckende Axialverrippung aufweisen.

Ferner beschreibt die DE 10 2015 221 776 A1 eine Gehäuseanordnung wobei eine äußere Kühlmantelfläche des Kühlmantels durch die Innenwandung des Statoraufnahmebereichs gebildet ist und diese Innenwandung konisch oder stufenzylindrisch ausgebildet ist.

Weitere elektrische Antriebe sind aus der DE 10 2018 104 893 A1, der JP 6 302 736 B2, der US 2017/217301 A1 und der US 2022/271 608 A1 bekannt.

### Offenbarung der Erfindung

Die Erfindung schafft einen elektrischen Antrieb für ein elektrisch angetriebenes Fahrzeug mit den Merkmalen des Anspruchs 1.

Gemäß einem ersten Aspekt der Erfindung ist ein elektrischer Antrieb für ein elektrisch angetriebenes Fahrzeug vorgesehen. Der elektrische Antrieb weist ein Systemgehäuse, welches einen Statoraufnahmebereich aufweist, und einen Stator, welcher in dem Statoraufnahmebereich angeordnet ist, auf. Ferner weist der elektrische Antrieb ein Statorgehäuse auf, welches den Stator trägt und zumindest abschnittsweise umschließt. Das Statorgehäuse enthält an seiner Außenwandung eine spiralförmig angeordnete Rippeneinrichtung zur Führung eines Kühlmediums in einem Zwischenraum zwischen dem Systemgehäuse und dem Statorgehäuse.

Eine der vorliegenden Erfindung zugrunde liegende Idee besteht darin, einen engen Dichtspalt zwischen der Rippeneinrichtung und dem Systemgehäuse bereitzustellen, damit der Zwischenraum/Kühlkanal gleichmäßiger von dem Kühlmedium durchströmt wird. Daraus folgt eine gleichmäßigere Kühlleistung des elektrischen Antriebs während des Betriebs. Weiterhin wird eine homogenere Kühlung über die gesamte Mantelfläche des Statorgehäuses ermöglicht. Zusätzlich wird eine Selbstentlüftung des Systemgehäuses verbessert.

Die Selbstentlüftung kann dabei eine beim Befüllen bzw. Wiederbefüllen des Zwischenraums eingebrachte Luft durch eine kontinuierlich verhältnismäßig hohe Strömungsgeschwindigkeit des Kühlmediums mit der Strömung des Kühlmediums aus dem Zwischenraum wieder herausgefördert werden. Vorteilhafterweise kann die eingebrachte Luft folglich nicht auf unbestimmte Zeit in dem Zwischenraum verbleiben und so möglicherweise erst zu einem späteren Zeitpunkt unkontrolliert in ein Kühlsystem gelangen.

Ferner wird eine Bearbeitung des Systemgehäuses im Anschluss an ein Druckgussverfahren reduziert, indem eine Kontur der Rippeneinrichtung an eine Form des Statoraufnahmebereichs anpassbar ist. Durch die Minimierung der notwendigen Bearbeitung des Systemgehäuses im Statoraufnahmebereich kann die Gefahr einer Leckage des Kühlkanals reduziert werden.

Vorteilhafte Ausgestaltungen und Weiterbildungen ergeben sich aus den weiteren Unteransprüchen sowie aus der Beschreibung unter Bezugnahme auf die Figuren der Zeichnung.

Eine Innenwandung des Statorgehäuses ist zylindrisch ausgebildet. Auf diese Weise kann der Stator komplett zylindrisch geformt sein, um in dem Statorgehäuse montiert zu sein. Folglich muss der Stator nicht in mehreren Lagen aus einer Vielzahl von Statorblechen mit unterschiedlichen Durchmessern gestanzt werden. Daher können dadurch die Gestaltung des Stators vereinfacht und die Kosten bei der Herstellung verringert werden.

Der Statoraufnahmebereich des Systemgehäuses ist konisch oder stufenzylindrisch ausgebildet. Insbesondere ist eine Innenwandung des Statoraufnahmebereichs konisch oder stufenzylindrisch ausgebildet. Alternativ kann der Statoraufnahmebereich bzw. die Innenwandung konisch und stufenzylindrisch ausgebildet sein. Beispielsweise in einem vorderen Abschnitt konisch, wobei der Statoraufnahmebereich in einen stufenzylindrisch ausgebildeten Abschnitt wechseln kann.

Beim Fügevorgang des Stators, das heißt während des axialen Verschiebens des Stators relativ zu einem Rotor, der von dem Stator umgeben ist, kann es zu einer Kollision zwischen einer Kontur des Statorgehäuses und einer Kontur des Statoraufnahmebereichs kommen. Dieses Risiko liegt insbesondere dann vor, wenn zwei zylindrische Teile gefügt werden. Somit kann durch die konische oder stufenzylindrische Gestaltung des Statoraufnahmebereichs der Fügevorgang erleichtert werden, da sich ein Spalt zwischen der Rippeneinrichtung und dem Systemgehäuse erst am Ende des Fügevorgangs verkleinert. Folglich liegt zu Beginn des Fügevorgangs ein verhältnismäßig großer Spalt vor, bei dem die Gefahr der Kollision verschwindend gering ist. Auf diese Weise wird zwar ein zusätzlicher Bearbeitungsschritt notwendig, jedoch wird bei der Nachbearbeitung des Statoraufnahmebereichs des Systemgehäuses im Anschluss an das Druckgussverfahren weniger Material zerspant, als bei der Nachbearbeitung auf einen konstanten Durchmesser über die gesamte Länge des Statoraufnahmebereichs, sprich auf eine zylindrische Form des Statoraufnahmebereichs, insbesondere auf eine zylindrische Form der Innenwandung.

Gemäß einer Weiterbildung des elektrischen Antriebs weisen die einzelnen Stufen des stufenzylindrisch ausgebildeten Statoraufnahmebereichs einen radialen Sprung an einer Innenwandung des Systemgehäuses von höchstens etwa 2 mm auf. Vorzugsweise weisen die einzelnen Stufen des stufenzylindrisch ausgebildeten Statoraufnahmebereichs einen radialen Sprung an einer Innenwandung des Systemgehäuses von höchstens etwa 0,8 mm auf. Somit kann die spanende Nachbearbeitung des Systemgehäuses weiter verringert werden.

Eine Einhüllende der Rippeneinrichtung korrespondiert in ihrer Konizität im Wesentlichen mit einer Konizität des Statoraufnahmebereichs. Die Einhüllende bezeichnet eine fiktive Mantelfläche, welche die Rippeneinrichtung in gedanklicher Näherung bildet, wobei die Einhüllende die Spitzen der Rippeneinrichtung tangiert. Dabei korrespondiert die Einhüllende der Rippeneinrichtung insbesondere im Wesentlichen mit einer Konizität der Innenwandung des Statoraufnahmebereichs. Somit kann der Dichtspalt zwischen der Rippeneinrichtung und dem Systemgehäuse gering gehalten werden, wodurch das Kühlmedium den Zwischenraum gleichmäßiger durchströmen kann.

Gemäß einer weiteren Weiterbildung des elektrischen Antriebs weist die Rippeneinrichtung in einer Axialrichtung des Statorgehäuses eine Steigung in einem Bereich von etwa 5 mm bis etwa 50 mm auf. Insbesondere weist die Rippeneinrichtung in einer Axialrichtung des Statorgehäuses eine Steigung in einem Bereich von etwa 10 mm bis etwa 35 mm auf. Optional kann die Steigung der Rippeneinrichtung entlang der Axialrichtung variieren. Beispielsweise kann die Steigung der Rippeneinrichtung in einem Abschnitt des Statorgehäuses, in welchem die Rippeneinrichtung in einer Radialrichtung betrachtet tiefer ausgebildet ist, geringer sein als in einem Abschnitt des Statorgehäuses, in welchem die Rippeneinrichtung in einer Radialrichtung betrachtet flacher ausgebildet ist. Das bedeutet eine Querschnittsfläche des Kühlkanals kann über den gesamten Zwischenraum im Wesentlichen konstant sein, indem die Steigung in Axialrichtung an eine Höhe der Rippeneinrichtung angepasst ist, wodurch das Produkt aus Steigung und Höhe im Wesentlichen konstant sein kann. Ebenso kann die Querschnittsfläche durch die variierende Steigung auch vergrößert oder verkleinert werden, um beispielsweise eine Strömungsgeschwindigkeit des Kühlmediums zu senken bzw. erhöhen.

Alternativ oder zusätzlich kann die Rippeneinrichtung im Querschnitt betrachtet eine mittlere Breite in einem Bereich von etwa 2 mm bis etwa 12 mm aufweisen. Insbesondere kann die Rippeneinrichtung im Querschnitt betrachtet eine mittlere Breite in einem Bereich von etwa 3 mm bis etwa 10 mm aufweisen. Das heißt die mittlere Breite stellt eine Erstreckung der Rippeneinrichtung in der Axialrichtung des Statorgehäuses dar, wobei die mittlere Breite in etwa bei der Hälfte der Höhe der Rippeneinrichtung gegeben ist.

Erfindungsgemäß weist die Rippeneinrichtung des in dem Statoraufnahmebereich montierten Statorgehäuses in einer Radialrichtung des Statorgehäuses in Bezug zu dem Systemgehäuse einen Dichtspalt von höchstens etwa 0,4 mm auf. Vorzugsweise weist die Rippeneinrichtung des in dem Statoraufnahmebereich montierten Statorgehäuses in einer Radialrichtung des Statorgehäuses in Bezug zu dem Systemgehäuse einen Dichtspalt von höchstens 0,30 mm auf. Somit kann die Gefahr einer Doppelpassung verringert werden, da die Rippeneinrichtung nicht in Kontakt mit dem Systemgehäuse kommen sollten, wobei der Dichtspalt in der Radialrichtung hinreichend gering ist, um einen Kühlmediumstrom über die Spitzen der Rippeneinrichtung im Wesentlichen zu unterbinden. Folglich kann die Führung des Kühlmediums in dem Zwischenraum verbessert werden. Insbesondere entspricht der Dichtspalt einem Dichtspalt, welcher zwischen Systemgehäuse und dem Statorgehäuse angestrebt wird, um eine zuverlässige Führung des Kühlmediums zu gewährleisten.

Erfindungsgemäß weist das Statorgehäuse einen zylindrischen Grundkörper, insbesondere einen hohlzylindrischen Grundkörper, mit einem Außendurchmesser in einem Bereich von etwa 100 mm bis etwa 350 mm auf. Insbesondere weist das Statorgehäuse einen zylindrischen Grundkörper, insbesondere einen hohlzylindrischen Grundkörper, mit einem Außendurchmesser in einem Bereich von etwa 150 mm bis etwa 300 mm auf.

Erfindungsgemäß weist die Rippeneinrichtung in Bezug zu einem zylindrischen Grundkörper des Statorgehäuses in einer Radialrichtung des Statorgehäuses eine Höhe in einem Bereich von etwa 3 mm bis etwa 20 mm auf. Das heißt die Höhe stellt eine Erstreckung der Rippeneinrichtung in der Radialrichtung ausgehend von dem zylindrischen Grundkörper des Statorgehäuses dar. Vorzugsweise weist die Rippeneinrichtung in Bezug zu einem zylindrischen Grundkörper des Statorgehäuses in einer Radialrichtung des Statorgehäuses eine Höhe in einem Bereich von etwa 5 mm bis etwa 15 mm auf.

Gemäß einer weiteren Weiterbildung des elektrischen Antriebs ist die spiralförmig angeordnete Rippeneinrichtung eingängig oder zweigängig ausgebildet. Insbesondere bei einer zweigängigen Rippeneinrichtungnanordnung können mehrere unabhängig, parallel verlaufende Kühlkanäle bereitgestellt werden. Dabei kann die zweigängige Rippeneinrichtungnanordnung den Vorteil haben, dass bei Problemen in einem ersten Kühlkanal der zweite Kühlkanal zumindest eine Mindestkühlung bereitstellt, da der zweite Kühlkanal beispielsweise von einer Verstopfung des ersten Kühlkanals nicht betroffen ist und weiterhin Kühlmedium strömen kann. Optional kann der Kühlmediumstrom in einem der mehreren Kühlkanäle über eine Steuerungseinheit gesteuert werden.

Im Folgenden wird die Erfindung unter Bezugnahme auf die Figuren der Zeichnungen erläutert. Von den Figuren zeigen:
- Fig. 1: eine schematische Schnittdarstellung eines Statoraufnahmebereichs und einem darin montierten Statorgehäuse gemäß einem Ausführungsbeispiel der Erfindung;
- Fig. 2: eine schematische Seitenansicht eines elektrischen Antriebs zu Beginn eines Fügevorgangs, bei dem ein Stator und ein Rotor gefügt werden, gemäß einem weiteren Ausführungsbeispiel der Erfindung;
- Fig. 3: eine schematische Seitenansicht des elektrischen Antriebs nach Fig. 2 am Ende des Fügevorgangs, wobei ein Zwischenraum für ein Kühlmedium ausgebildet ist.

In den Figuren bezeichnen dieselben Bezugszeichen gleiche oder funktionsgleiche Komponenten, soweit nichts Gegenteiliges angegeben ist.

Eine Steigung der Rippeneinrichtung im Sinne dieser Anmeldung bezeichnet die Wegstrecke entlang der Axialrichtung, die die Rippeneinrichtung bei einem Umlauf zurücklegt. Das entspricht dem Abstand zwischen zwei Spitzen der Rippeneinrichtung in der Axialrichtung.

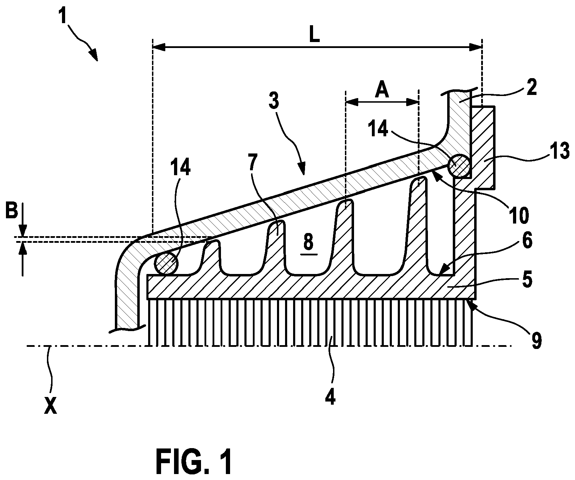

Eine Spitze bzw. ein Kopf der Rippeneinrichtung im Sinne dieser Anmeldung bezeichnet den am weitesten entfernt liegenden Punkt in der Radialrichtung mit Bezug zu einer Rotationsachse des Statorgehäuses im Längsschnitt des Statorgehäuses (wie auch die Fig. 1 bis 3 geschnitten sind). Der Längsschnitt des Statorgehäuses entspricht dem Querschnitt des Rippeneinrichtung. Dabei bezieht sich die Spitze/der Kopf jeweils auf einen konkreten Punkt der Rippeneinrichtung wie er in einem konkreten Längsschnitt jeweils vorliegt, so dass die Rippeneinrichtung eine Vielzahl von infinitesimal kleinen Spitzen entlang ihrer spiralförmigen Erstreckung aufweist.

Insbesondere entspricht ein radialer Sprung der Steigung der Rippeneinrichtung multipliziert mit dem Tangens der Entformungsschräge des Statoraufnahmebereichs, wobei die Entformungsschräge in Grad, also °, angegeben ist. Dementsprechend liegt mit zunehmender Steigung der Rippeneinrichtung auch ein größerer radialer Sprung vor.

Fig. 1 zeigt eine schematische Schnittdarstellung eines Statoraufnahmebereichs 3 und einem darin montierten bzw. eingesetzten Statorgehäuse 5.

Der Statoraufnahmebereich 3 eines Systemgehäuses 2 und das Statorgehäuse 5 sind Teil eines elektrischen Antriebs 1 für ein elektrisch angetriebenes Fahrzeug. Der Statoraufnahmebereich 3 des Systemgehäuses 2 ist in Fig. 1 beispielhaft konisch ausgebildet. Dabei weist der Statoraufnahmebereich 3 vorzugsweise eine im Wesentlichen konstante Wandstärke des Systemgehäuses 2 auf, ist jedoch nicht darauf beschränkt. Alternativ kann die Wandstärke variieren. Zwischen dem Systemgehäuse 2 und dem Statorgehäuse 5 ist ein Zwischenraum 8 gebildet. In dem Zwischenraum 8 kann ein Kühlmedium, insbesondere eine Kühlflüssigkeit, fließen. Das Statorgehäuse 5 bzw. dessen Innenwandung 9 ist vorzugsweise zylindrisch ausgebildet.

Ferner enthält der elektrische Antrieb 1 einen Stator 4. Der Stator 4 ist aus einer Vielzahl einzelner Statorbleche gebildet, die zu einem sogenannten Statorblechpaket gestapelt bzw. zusammengefasst sind. Der Stator 4 bzw. das Statorblechpaket ist in dem Statorgehäuse 5 angeordnet, dessen Außenumfangsfläche/Außenwandung 6 zugleich eine innere Kühlmantelfläche des Zwischenraums 8 bildet und der den Zwischenraum 8 statorseitig bzw. nach (radial) innen abdichtet. Das Statorgehäuse 5 wird zusammen mit dem darin aufgenommenen Stator 4 gemäß der Darstellung in Fig. 1 von rechts montiert. Aufgrund der konischen Ausbildung einer Innenwandung des Statoraufnahmebereichs 3 ist die Montageöffnung bzw. der Öffnungsquerschnitt des Statoraufnahmebereichs 3 flächengrößer als eine Bodenfläche am anderen axialen Ende des Statoraufnahmebereichs 3. Die Drehmomentabstützung des Statorgehäuses 5 gegenüber dem Systemgehäuse 2 kann mithilfe eines Deckels 13 bewirkt werden, der zum Beispiel mit dem Systemgehäuse 2 verschraubt oder verschweißt wird. Beispielhaft ist der Deckel 13 einstückig mit dem Statorgehäuse 5 ausgebildet. Zusätzlich verschließt der Deckel 13 den Zwischenraum 8 in einer Axialrichtung X an einer Öffnungsseite des Statoraufnahmebereichs 3. Die Abdichtung zwischen dem Statorgehäuse 5 bzw. dessen Außenwandung 6, dem Deckel 13 und dem systemgehäuseseitigen Statoraufnahmebereich 3 bzw. dessen Innenwandung 10 erfolgt durch zwei elastische Dichtungen 14, die vorzugsweise als Dichtringe ausgebildet sind.

Darüber hinaus ist an der Außenwandung 6 des Statorgehäuses 5 eine Rippeneinrichtung 7 in einer spiralförmigen Anordnung vorgesehen. In Fig. 1 weist die Rippeneinrichtung 7 beispielhaft eine Rippe auf. Das heißt die Rippeneinrichtung 7 ist eingängig. Die Spiralform erstreckt sich dabei um die Axialrichtung X des Statorgehäuses 5 herum, so dass die spiralförmig angeordnete Rippe vergleichbar mit einem Gewinde ausgerichtet ist. Die Rippe 7 des Statorgehäuses 5 ragt, wie in Fig. 1 dargestellt, in einer Radialrichtung von der Außenwandung 6 des Statorgehäuses 5 ab. Somit bildet die Rippe 7 in dem Zwischenraum 8 zumindest einen Kühlkanal aus, durch welchen das Kühlmedium strömen kann. Ferner ragt die Rippe 7 in der Radialrichtung von der Außenwandung 6 bis an die Innenwandung 10 heran, wobei die radiale Erstreckung aufgrund des konisch ausgebildeten Statoraufnahmebereichs 3 in Kombination mit dem zylindrisch ausgebildeten Statorgehäuse 5 geringer wird je weiter sich der Konus des Statoraufnahmebereichs 3 von der Öffnungsseite zu der Bodenfläche hin verjüngt. Dementsprechend nimmt die radiale Erstreckung der Rippe 7 gemäß der Fig. 1 von rechts nach links ab. Spitzen/Köpfe der Rippe 7 können gedanklich zu einer Einhüllenden verbunden werden. Die Einhüllende der Rippe 7 korrespondiert in ihrer Konizität im Wesentlichen mit einer Konizität des Statoraufnahmebereichs 3.

Beispielsweise weist die Rippe 7 eine Steigung A von etwa 21 mm in Bezug zu der entlang der Axialrichtung X benachbarten Spitze der Rippe 7 auf. Weiterhin umfasst die Rippe 7 in der Radialrichtung des Statorgehäuses 5 in Bezug zu dem Systemgehäuse 2 einen Dichtspalt B von höchstens 0,4 mm.

Optional kann die Rippe 7 mehrere Rippenabschnitte aufweisen, die voneinander verschieden ausgebildet sind. Beispielsweise kann die Rippe 7 teilweise oder vollständig unterbrochen sein. Weiterhin kann die Rippe 7 auch mit einer Rippe einer anderen Ausrichtung, also nicht-spiralförmigen Anordnung, kombiniert sein.

Ferner sind an dem einen axialen Ende des Statoraufnahmebereichs 3 eine Einlassöffnung zum Einströmen des Kühlmediums in den Zwischenraum 8 sowie an dem anderen axialen Ende des Statoraufnahmebereichs 3 eine Auslassöffnung zum Ausströmen des Kühlmediums angeordnet. Das bedeutet die Einlassöffnung und die Auslassöffnung sind an axial gegenüberliegenden Enden des Zwischenraumes 8 beispielhaft vorgesehen. In der Radialrichtung und einer Umfangsrichtung kann die Anordnung der Einlassöffnung und der Auslassöffnung im Wesentlichen frei gewählt werden.

Vorteilhafterweise kann dabei die Selbstentlüftung vorliegen. Zum einen kann die Selbstentlüftung durch die Schwerkraft gegeben sein, das heißt die Einlassöffnung ist beispielsweise in der Richtung der Schwerkraft im Verhältnis zu dem Zwischenraum 8 unten vorgesehen und die Auslassöffnung für das Kühlmedium in der Richtung der Schwerkraft im Verhältnis zu dem Zwischenraum 8 oben vorgesehen. In diesem Fall kann die Selbstentlüftung auch bei einem Dichtspalt B von mindestens 0,3 mm bereitgestellt werden, da die eingebrachte Luft, getrieben durch die Schwerkraft, auch aus Bereichen des Zwischenraumes 8 gefördert wird, welche mit einer verhältnismäßig geringen Strömungsgeschwindigkeit des Kühlmediums durchströmt sind.

Alternativ oder zusätzlich kann die Selbstentlüftung durch eine durchgehende Zwangsführung des Kühlmediums bereitgestellt werden. In diesem Fall liegen keine schwach durchströmten Bereiche des Zwischenraumes 8 vor, in welchen Luftblasen verbleiben könnten. Die durch das Befüllen bzw. Wiederbefüllen eingebrachte Luft kann durch die Strömung des Kühlmediums innerhalb einer vorgegebenen Zeit aus dem Zwischenraum gefördert werden. Beispielsweise kann hierfür ein geringer Dichtspalt B zwischen dem Statorträger 5 und dem Systemgehäuse 2 vorgesehen sein.

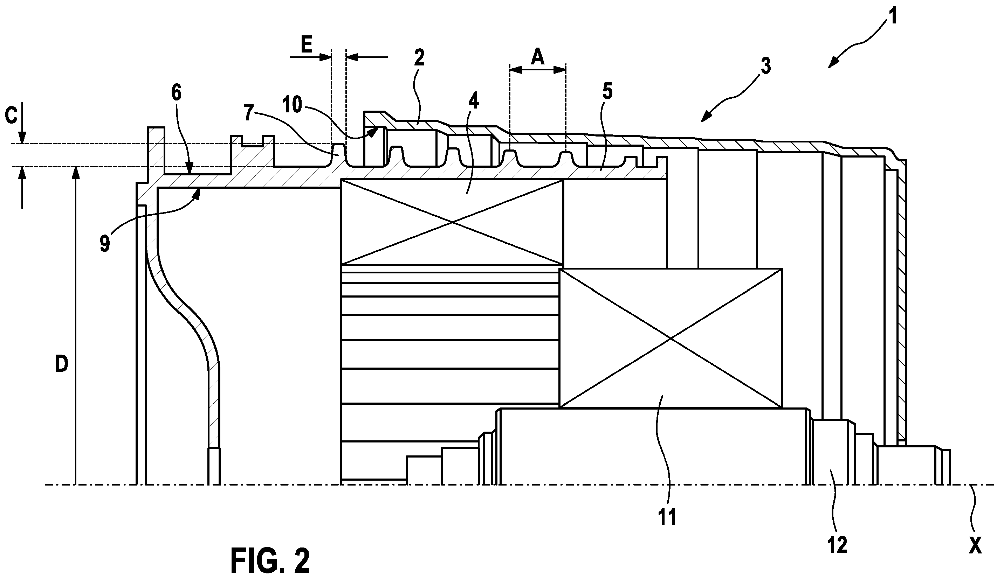

Fig. 2 zeigt eine schematische Seitenansicht eines elektrischen Antriebs 1 zu Beginn eines Fügevorgangs, bei dem ein Stator 4 und ein Rotor 11 gefügt werden.

Der elektrische Antrieb 1 umfasst ein Systemgehäuse 1 mit einem Statoraufnahmebereich 3, den Stator 4 und ein Statorgehäuse 5 mit einer Rippeneinrichtung 7. Dabei weisen diese Bestandteile im Wesentlichen die Merkmale, wie in Bezug zu Fig. 1 beschrieben ist, auf. Jedoch unterscheidet sich der elektrische Antrieb 1 gemäß dem Ausführungsbeispiel nach Fig. 2 von Fig. 1 dadurch, dass das Systemgehäuse 2 stufenzylindrisch ausgebildet ist. Dabei ist insbesondere die Innenwandung 10 des Systemgehäuses 2 stufenzylindrisch ausgebildet.

Zur Herstellung der stufenzylindrisch ausgebildeten Innenwandung 10 wird das Systemgehäuse 2 in dem Statoraufnahmebereich 3 in Stufen bearbeitet, wobei die Stufen einer Rohteil-Kontur des gegossenen Systemgehäuses 2 folgen. Somit kann gewährleistet werden, dass die erforderliche Bearbeitung minimal bleibt. Das nominale Maß der Bearbeitung kann durch die Anzahl der Stufen bestimmt werden, das bedeutet je mehr Stufen vorgesehen sind, desto kleiner ist das nominale Maß der Bearbeitung. Vorzugsweise beträgt das nominale Maß der Bearbeitung höchstens 2 mm.

Beispielhaft ist das Statorgehäuse in dem Ausführungsbeispiel nach Fig. 2 als hohlzylindrischer Grundkörper ausgebildet. Der hohlzylindrische Grundkörper weist einen Außendurchmesser D von etwa 220 mm auf. Darüber hinaus kann die Rippeneinrichtung im Querschnitt betrachtet beispielsweise eine mittlere Breite E von etwa 8 mm aufweisen. Vorzugsweise weist die Rippeneinrichtung in Bezug zu der Außenwandung 6 des hohlzylindrischen Grundkörpers eine Höhe C in einem Bereich von etwa 5 mm bis etwa 15 mm auf, wobei die Höhe der Rippeneinrichtung 7 mit zunehmendem Abstand zu der Öffnungsseite des Statoraufnahmebereichs 3 abnimmt.

Ferner umfasst der elektrische Antrieb 1 den Rotor 11, welcher auf einer Rotorwelle 12 montiert ist. Beispielsweise ist der elektrische Antrieb 1 als Elektromotor ausgebildet.

Der Fügevorgang wird mit einer Kraft-Weg-Kurve überwacht. Aus der Kraft-Weg-Kurve kann eine Kollision zwischen den Fügepartnern abgelesen werden.

Allerdings ist es nicht möglich zwischen einer Kollision im Bereich der Aktivteile des Elektromotors 1, das heißt von Stator 4 und Rotor 11, oder einer Kollision im Bereich der Gehäuseteile, also von Systemgehäuse 2 und Statorgehäuse 5 zu unterscheiden. In Fig. 2 ist erkennbar, dass zu Beginn des Fügevorgangs ein Spalt zwischen dem Systemgehäuse 2 und dem Statorgehäuse 5 größer ist als ein Spalt zwischen dem Stator 4 und dem Rotor 11. Daher ist die Kollision zwischen Rotor 11 und Stator 4 zu Beginn des Fügevorgangs am wahrscheinlichsten. Der Spalt zwischen der Rippeneinrichtung 7 des Statorgehäuses 5 und der Innenwandung 10 des Statoraufnahmebereichs 3 nimmt während des Fügevorgangs ab, wobei dieser Spalt am Ende des Fügevorgangs kleiner ist als der Spalt zwischen den Aktivteilen, also zwischen dem Stator 4 und dem Rotor 11. Vorteilhafterweise kann somit folgendermaßen analysiert werden. Tritt eine Kollision, wie sie aus der Kraft-Weg-Kurve abgelesen werden kann, zu Beginn des Fügevorgangs auf, ist es wahrscheinlich die Kollision zwischen dem Stator 4 und dem Rotor 11, das heißt den Aktivteilen. Tritt hingegen eine Kollision, wie sie aus der Kraft-Weg-Kurve abgelesen werden kann, am Ende des Fügevorgangs auf, ist es wahrscheinlich die Kollision zwischen dem Systemgehäuse 2 und dem Statorgehäuse 5.

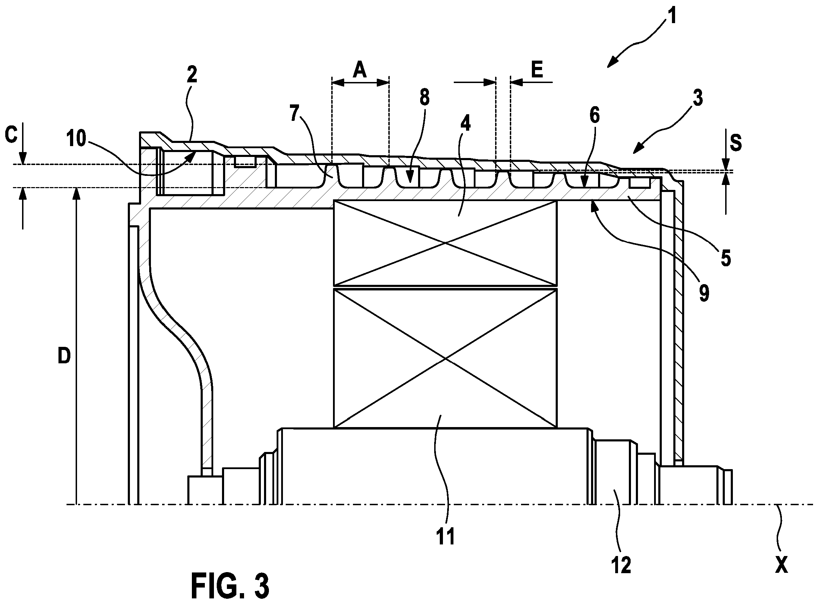

Fig. 3 zeigt eine schematische Seitenansicht des elektrischen Antriebs 1 nach Fig. 2 am Ende des Fügevorgangs, wobei ein Zwischenraum 8 für ein Kühlmedium ausgebildet ist.

In Fig. 3 weisen die einzelnen Stufen des stufenzylindrisch ausgebildeten Statoraufnahmebereichs 3 beispielhaft einen radialen Sprung S an der Innenwandung 10 des Systemgehäuses 2 auf. Der radiale Sprung S beträgt höchstens etwa 0,8 mm.

Obwohl die vorliegende Erfindung vorstehend anhand von Ausführungsbeispielen exemplarisch erläutert wurde, ist sie darauf nicht beschränkt.

## Patentansprüche

1. Elektrischer Antrieb (1) für ein elektrisch angetriebenes Fahrzeug, mit:
einem Systemgehäuse (2), welches einen Statoraufnahmebereich (3) aufweist;
einem Stator (4), welcher in dem Statoraufnahmebereich (3) angeordnet ist; und
einem Statorgehäuse (5), welches den Stator (4) trägt und zumindest abschnittsweise umschließt, wobei das Statorgehäuse (5) an seiner Außenwandung (6) eine spiralförmig angeordnete Rippeneinrichtung (7) zur Führung eines Kühlmediums in einem Zwischenraum (8) zwischen dem Systemgehäuse (2) und dem Statorgehäuse (4) aufweist, wobei eine Innenwandung (9) des Statorgehäuses (5) zylindrisch ausgebildet ist, wobei der Statoraufnahmebereich (3) des Systemgehäuses (2) konisch oder stufenzylindrisch ausgebildet ist, wobei eine Einhüllende der Rippeneinrichtung (7) in ihrer Konizität im Wesentlichen mit einer Konizität des Statoraufnahmebereichs (3) korrespondiert, **dadurch gekennzeichnet, dass** die Rippeneinrichtung (7) des in dem Statoraufnahmebereich (3) montierten Statorgehäuses (5) in einer Radialrichtung des Statorgehäuses (5) in Bezug zu dem Systemgehäuse (2) einen Dichtspalt (B) von höchstens etwa 0,4 mm aufweist und dass das Statorgehäuse (3) einen zylindrischen Grundkörper mit einem Außendurchmesser (D) in einem Bereich von etwa 100 mm bis etwa 350 mm aufweist und dass die Rippeneinrichtung (7) in Bezug zu dem zylindrischen Grundkörper des Statorgehäuses (3) in einer Radialrichtung des Statorgehäuses (3) eine Höhe (C) in einem Bereich von etwa 3 mm bis etwa 20 mm aufweist.

2. Elektrischer Antrieb nach einem der vorhergehenden Ansprüche, wobei die Rippeneinrichtung (7) in einer Axialrichtung (X) des Statorgehäuses (3) eine Steigung (A) in einem Bereich von etwa 5 mm bis etwa 50 mm, insbesondere in einem Bereich von etwa 10 mm bis etwa 35 mm, aufweist.

3. Elektrischer Antrieb nach einem der vorhergehenden Ansprüche, wobei die Rippeneinrichtung (7) des in dem Statoraufnahmebereich (3) montierten Statorgehäuses (5) in einer Radialrichtung des Statorgehäuses (5) in Bezug zu dem Systemgehäuse (2) einen Dichtspalt (B) von höchstens 0,30 mm aufweist.

4. Elektrischer Antrieb nach einem der vorhergehenden Ansprüche, wobei das Statorgehäuse (3) einen zylindrischen Grundkörper mit einem Außendurchmesser (D) in einem Bereich von etwa 150 mm bis etwa 300 mm aufweist.

5. Elektrischer Antrieb nach einem der vorangehenden Ansprüche, wobei die Rippeneinrichtung (7) in Bezug zu dem zylindrischen Grundkörper des Statorgehäuses (3) in einer Radialrichtung des Statorgehäuses (3) eine Höhe (C) in einem Bereich von etwa 5 mm bis etwa 15 mm aufweist.

6. Elektrischer Antrieb nach einem der vorhergehenden Ansprüche, wobei die spiralförmig angeordnete Rippeneinrichtung (7) eingängig oder zweigängig ausgebildet ist.

## Claims

1. Electric drive (1) for an electrically driven vehicle, comprising:
a system housing (2), which has a stator receiving region (3);
a stator (4), which is arranged in the stator receiving region (3); and
a stator housing (5), which supports the stator (4) and surrounds it at least in sections, wherein the stator housing (5) has, on its outer wall (6), a spirally arranged fin device (7) for guiding a cooling medium in an intermediate space (8) between the system housing (2) and the stator housing (4), wherein an inner wall (9) of the stator housing (5) is of cylindrical design, wherein the stator receiving region (3) of the system housing (2) is of conical or stepped-cylindrical design, wherein an envelope of the fin device (7) substantially corresponds in terms of its conicity to a conicity of the stator receiving region (3), **characterized in that** the fin device (7) of the stator housing (5) mounted in the stator receiving region (3) has a sealing gap (B) of at most approximately 0.4 mm in a radial direction of the stator housing (5) with respect to the system housing (2), and **in that** the stator housing (3) has a cylindrical main body with an outside diameter (D) in a range of approximately 100 mm to approximately 350 mm, and **in that** the fin device (7) has a height (C) in a range of approximately 3 mm to approximately 20 mm with respect to the cylindrical main body of the stator housing (3) in a radial direction of the stator housing (3).

2. Electric drive according to one of the preceding claims, wherein the fin device (7) has a gradient (A) in a range of approximately 5 mm to approximately 50 mm, in particular in a range of approximately 10 mm to approximately 35 mm, in an axial direction (X) of the stator housing (3).

3. Electric drive according to either of the preceding claims, wherein the fin device (7) of the stator housing (5) mounted in the stator receiving region (3) has a sealing gap (B) of at most 0.30 mm in a radial direction of the stator housing (5) with respect to the system housing (2).

4. Electric drive according to one of the preceding claims, wherein the stator housing (3) has a cylindrical main body with an outside diameter (D) in a range of approximately 150 mm to approximately 300 mm.

5. Electric drive according to one of the preceding claims, wherein the fin device (7) has a height (C) in a range of approximately 5 mm to approximately 15 mm with respect to the cylindrical main body of the stator housing (3) in a radial direction of the stator housing (3).

6. Electric drive according to one of the preceding claims, wherein the spirally arranged fin device (7) is of single-start or double-start design.

## Revendications

1. Mécanisme d'entraînement électrique (1) pour un véhicule à propulsion électrique, comprenant :
un boîtier de système (2), lequel possède une zone de logement de stator (3) ;
un stator (4), lequel est disposé dans la zone de logement de stator (3) ; et
un carter de stator (5), lequel porte et entoure au moins partiellement le stator (4), le carter de stator (5) présentant, sur sa paroi extérieure (6), un dispositif à ailettes (7) disposé en forme de spirale destiné à guider un fluide de refroidissement dans un espace intermédiaire (8) entre le boîtier de système (2) et le carter de stator (4), une paroi intérieure (9) du carter de stator (5) étant de configuration cylindrique, la zone de logement de stator (3) du boîtier de système (2) étant de configuration conique ou cylindrique étagée, une enveloppe du dispositif à ailettes (7) correspondant sensiblement, dans sa conicité, à une conicité de la zone de logement de stator (3), **caractérisé en ce que** le dispositif à ailettes (7) du carter de stator (5) monté dans la zone de logement de stator (3) présente un jeu d'étanchéité (B) d'au plus environ 0,4 mm dans une direction radiale du carter de stator (5) par rapport au boîtier de système (2), et **en ce que** le carter de stator (3) possède un corps de base cylindrique ayant un diamètre extérieur (D) dans une plage d'environ 100 mm à environ 350 mm et **en ce que** le dispositif à ailettes (7) présente, dans une direction radiale du carter de stator (3), une hauteur (C) dans une plage d'environ 3 mm à environ 20 mm par rapport au corps principal cylindrique du carter de stator (3).

2. Mécanisme d'entraînement électrique selon l'une des revendications précédentes, le dispositif à ailettes (7) présentant, dans une direction axiale (X) du carter de stator (3), un pas (A) dans une plage d'environ 5 mm à environ 50 mm, en particulier dans une plage d'environ 10 mm à environ 35 mm.

3. Mécanisme d'entraînement électrique selon l'une des revendications précédentes, le dispositif à ailettes (7) du carter de stator (5) monté dans la zone de logement de stator (3) présentant, dans une direction radiale du carter de stator (5), un jeu d'étanchéité (B) d'au plus 0,30 mm par rapport au boîtier de système (2).

4. Mécanisme d'entraînement électrique selon l'une des revendications précédentes, le carter de stator (3) possédant un corps de base cylindrique ayant un diamètre extérieur (D) dans une plage d'environ 150 mm à environ 300 mm.

5. Mécanisme d'entraînement électrique selon l'une des revendications précédentes, le dispositif à ailettes (7) présentant, dans une direction radiale du carter de stator (3), une hauteur (C) dans une plage d'environ 5 mm à environ 15 mm par rapport au corps de base cylindrique du carter de stator (3).

6. Mécanisme d'entraînement électrique selon l'une des revendications précédentes, le dispositif à ailettes (7) disposé en forme de spirale étant de configuration à un pas ou à deux pas.
